# EUROPEAN PATENT APPLICATION

(11) **EP 4 738 547 A1**
(43) Date of publication of application: **06.05.2026**
(21) Application number: 24886321.9
(22) Date of filing: 31.10.2024
(51) Int. Cl.: H01M 10/658, H01M 10/647, H01M 10/625, H01M 50/211, H01M 50/24, H01M 50/249

(54) **THERMAL PROPAGATION PREVENTION BATTERY MODULE**

(30) Priority: 02.11.2023 KR 20230149919
(71) Applicant: LG Energy Solution, Ltd., Seoul 07335 (KR)
(72) Inventor: LEE, Geumpyo, Daejeon 34122 (KR); CHOI, Wansup, Daejeon 34122 (KR); JUNG, Kitaek, Daejeon 34122 (KR); PARK, Dongho, Daejeon 34122 (KR); HEO, Samhoe, Daejeon 34122 (KR); KIM, Jongjin, Daejeon 34122 (KR); PARK, Jeongjae, Daejeon 34122 (KR)
(74) Representative: BCKIP Part mbB
(86) International application number: PCT/KR2024/016972
(87) International publication number: WO 2025/095649

(57) **Abstract**

The present invention provides a structure of a battery module, comprising: a cell laminate comprising: a plurality of battery cells laminated in a widthwise direction; and a barrier member interposed therebetween; a housing comprising: a pack frame accommodating the cell laminate; and a cover covering an upper end of the pack frame; and a barrier receptor coupled to an inner surface of the cover the barrier receptor having a shape open in downward direction with an upper end of the barrier member inserted therein, wherein the barrier member and the barrier receptor are provided with overlapping sections of a predetermined length extending in upward direction and overlapping in widthwise direction, and the barrier member and the barrier receptor are slidable in upward direction while maintaining contact with each other.

## Description

### [TECHNICAL FIELD]

This application claims the benefit of priority based on Korean Patent Application No. 10-2023-0149919 filed on November 2, 2023, entire content disclosed in the document of the patent applications is included as a part of this specification.

The present invention relates to a structure of a battery module including a cell laminate with a plurality of pouch-type cells are stacked therein capable of preventing thermal runaway at the module level caused by thermal propagation between cells.

### [BACKGROUND ART]

Secondary batteries, which provides ease of application depending on the product group and have electrical characteristics such as high energy density, are widely applied not only to portable devices, but also to electric vehicles or hybrid vehicles driven by an electrical driving source, and power storage devices. These secondary batteries are attracting attention as a new energy source for improving eco-friendliness and energy efficiency, not only because they have the primary advantage of being able to dramatically reduce the use of fossil fuels, but also because they do not generate any by-products due to energy use.

While small mobile devices use one or two or three battery cells per device, medium to large devices such as vehicles require high output and large capacity. Therefore, a medium to large-sized battery module wherein multiple battery cells are electrically connected is used.

Since it is desirable for medium to large-sized battery modules to be manufactured in as small and light as possible, rectangular batteries and pouch-type batteries that may be stacked with high integration and have a small weight-to-capacity battery are mainly used as battery cells for medium to large-sized battery modules.

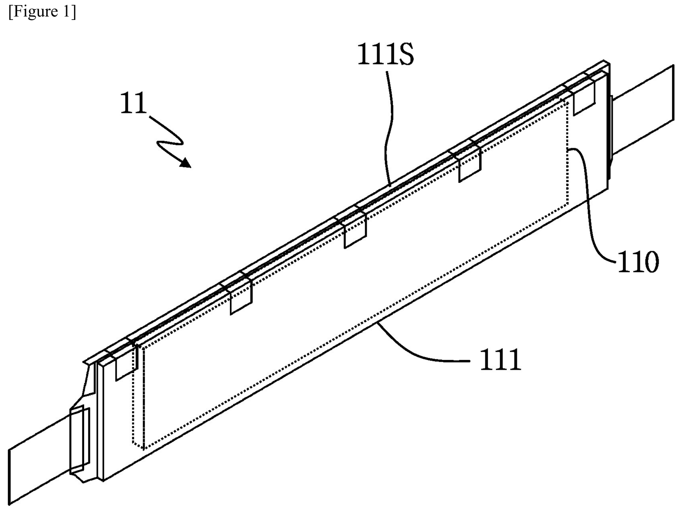

FIG. 1 illustrates a structure of a pouch-type battery cell. Referring to FIG. 1, a general pouch-type battery cell 11 has a structure wherein an electrode assembly 110 is accommodated in a pouch 111. The pouch 111 accommodates the electrode assembly 110 by folding and sealing a sheet in half and is fused and sealed at a sealed portion 111S on one heightwise end. A plurality of battery cell 11 may be laminated to form a cell laminate for higher voltage and/or a higher capacity.

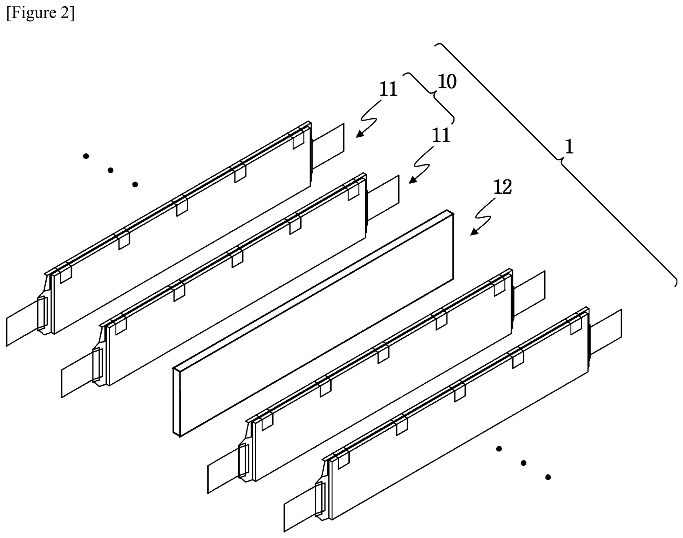

FIG. 2 illustrates the constitution of a cell laminate. Referring to FIG. 2, a plurality of battery cells 11 may be laminated in a widthwise direction to form a cell laminate 1. The cell laminate 1 may also include a barrier member 12 interposed between the battery cells 11 to prevent thermal propagation between the battery cells 11. The battery cells 11 may integrated to form one or more cell banks 10 isolated by the barrier member 12. The cell laminate 1 may be electrically connected to form a single module.

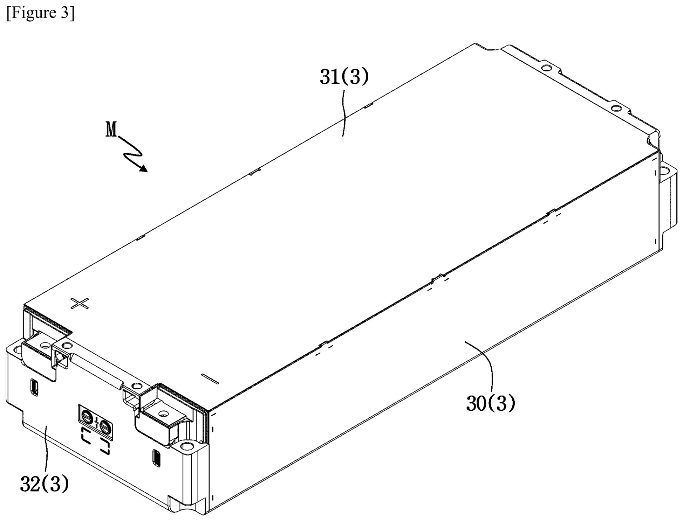

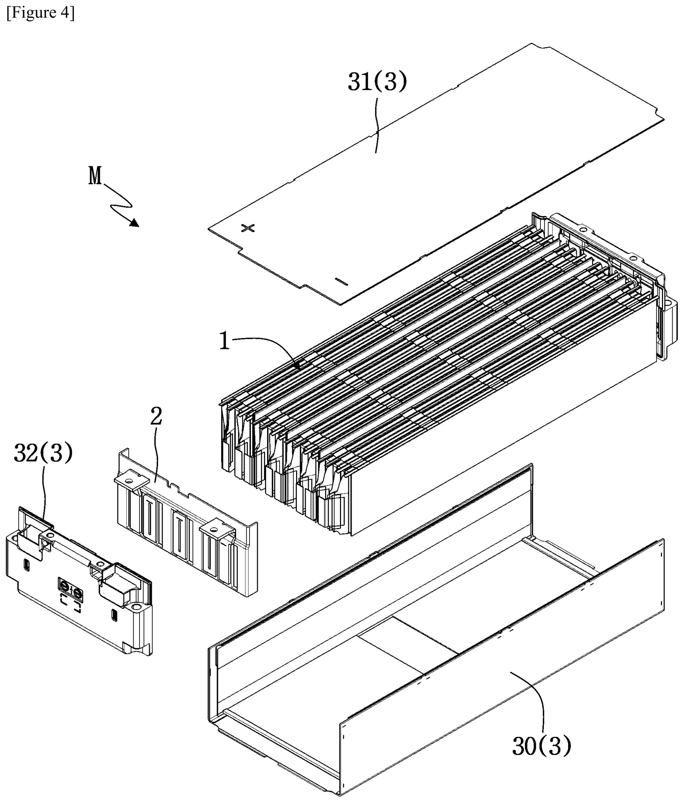

FIGS. 3 and 4 illustrate the structure of a general battery module. Referring to FIGS. 3 and 4, the battery module M may include a bus bar frame assembly 2 connected to the front portion of the cell laminate 1 to electrically connect the battery cells 11 to each other, and a housing 3 that accommodates the cell laminate 1.

Meanwhile, thermal runaway may occur in the battery cell 11 due to a short circuit or shock. The high-temperature gas and flame generated during the thermal runaway may be discharged through the upper portion of the battery cell 11 as the fused portion of the sealed portion 111S melts. The gas and flame may transmit heat to other battery cells through the free space within the housing above the cell laminate. Accordingly, there is a risk that not only the battery cell 11 but also other battery cells may ignite in a chain reaction, resulting in thermal runaway at the module level.

### [DISCLOSURE]

### [TECHNICAL PROBLEM]

In order to solve above-described problems of prior art, it is an object of the present invention to provide a structure of a battery module wherein thermal propagation between battery cells is delayed or prevented.

Specifically, it is an object of the present invention to provide a structure of a battery module wherein thermal runaway at the module level is delayed or prevented by blocking thermal propagation between cells caused by high-temperature gas and flame discharged from battery cells.

It is another object of the present invention to provide a structure of a battery module capable of maintaining thermal propagation prevention structure and insulation structure despite deformation caused by thermal runaway.

It is yet another object of the present invention to provide a structure of a battery module that is resistant to structural deformation caused by assembly tolerance or swelling, and is easy to manufacture.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve the above-described problems, the present invention provides a structure of a battery module, comprising: a cell laminate comprising: a plurality of battery cells laminated in a widthwise direction; and a barrier member interposed therebetween; a housing comprising: a pack frame accommodating the cell laminate; and a cover covering an upper end of the pack frame; and a barrier receptor coupled to an inner surface of the cover the barrier receptor having a shape open in downward direction with an upper end of the barrier member inserted therein, wherein the barrier member and the barrier receptor are provided with overlapping sections of a predetermined length extending in upward direction and overlapping in widthwise direction, and the barrier member and the barrier receptor are slidable in upward direction while maintaining contact with each other.

The battery cell may be a pouch-type battery cell including an electrode assembly and a pouch accommodating the electrode assembly by folding a sheet in half which is fused and sealed at a sealed portion on one heightwise end thereof. The sealing may be achieved by a fusion sealing, and thus the sealed portion may be melted by high-temperature heat such that the sealed portion serves as a passage for mainly discharging gas and flame generated inside the pouch in upward direction. However, the structure of the battery cell is not limited to a pouch-type.

The barrier member may include a heat-resistant material. Accordingly, even in a thermal runaway situation, the barrier member may maintain the structure thereof and block thermal propagation between cells.

The barrier member may protrude in upward direction with respect to the cell laminate. The protruding barrier member may divide, in widthwise direction, at least a portion of the space between the cell laminate and the cover, thereby preventing thermal propagation between cells of caused by gas and flame travelling through the space.

Here, the barrier member and the barrier receptor are slidable in upward direction while maintaining the contact with each other such that the space may be maintained in partitioned state in widthwise direction even when the distance between the cover and the cell laminate changes due to deformation of the cover.

The barrier member and/or the barrier receptor may include a compressible material. Preferably, the barrier member and/or the barrier receptor may be compressed in widthwise direction as the barrier member is inserted into the barrier receptor. Accordingly, the barrier member and the barrier receptor may exchange elastic restoring forces in the widthwise direction toward each other to achieve closer contact and sealing.

In addition, when the barrier member includes a compressible material, the barrier member may absorb the assembly tolerance of the cell laminate and the swelling of the battery cell.

The barrier member and/or the barrier receptor may include a compressible pad including a compressible material and a pair of rigid plates laminated on two widthwise ends of the compressible pad. It is preferable that the rigid plates include a heat-resistant material. Due to the multi-layer structure of the barrier member and/or the barrier receptor, the heat-resistance, structural stability, insulating property, and/or assembling property of the barrier member and/or the barrier receptor may be secured simultaneously.

The barrier receptor may include a pair of sidewall portions that protrude from the inner surface of the cover to two widthwise ends of the barrier member and extend in a lengthwise direction. When the barrier receptor includes a compressible material, it is preferable that the compressible material is included in at least the sidewall portions.

The barrier receptor may include a connecting part provided on the inner surface of the cover and connected to the pair of sidewall portions at two widthwise ends thereof, respectively. The connecting part may include a flexible body deforming together with the cover as the cover is deformed. "Flexible body" of the connecting part may refer to the connecting part connected to the cover not being able to resist the deformation of the cover as the bending rigidity of the connecting part is not greater than that of the cover. As the connecting part is deformed together with the cover, the inner width of the sidewall portion is narrowed, and the connecting part may come into close contact with the barrier member.

A tapered portion narrowing in upward direction may be provided at an upper end of the barrier member.

A tapered portion narrowing in downward direction may be provided at the barrier receptor.

The tapered portion provided at the barrier member and/or the barrier receptor may guide the barrier member to be accurately inserted into the barrier receptor, and when the barrier member and/or the barrier receptor comprises a compressible material, the barrier member and/or the barrier receptor may be compressed in widthwise direction as the barrier member is inserted into the barrier receptor.

In order to maintain the overlapping section even at the maximum displacement of the cover, the length of the overlapping section may be at least 1/2 of a distance between the upper surface of the cell laminate and the inner surface of the cover.

The barrier member and the barrier receptor may be provided in multiple pairs. Here, the overlapping section of a pair of the barrier member and the barrier receptor closer to the widthwise center may be longer than that of a pair of the barrier member and the barrier receptor farther from the widthwise center. This is because the displacement in the upward direction is greater in the area closer to the widthwise center of the cover when the cover is deformed.

Specifically, among the multiple pairs of the barrier member and the barrier receptor, the length of the overlapping section of a pair of the barrier member and the barrier receptor closest to the widthwise center may be at least 1/2 of the distance between an upper surface of the cell laminate and the inner surface of the cover.

The present invention also provides structures of a battery pack including the battery module and a vehicle including the battery pack.

A plurality of battery modules may be integrated into a battery pack to increase the capacity and/or voltage thereof. The battery pack may include an exhaust device capable of discharging gases and flames emitted in an upward direction to the outside when the battery module ignites. The battery pack may be built into a vehicle as a power source. The vehicle may include an electric vehicle, a hybrid vehicle, etc.

### [ADVANTAGEOUS EFFECTS]

The present invention may provide a structure of a battery module wherein a heat-resistant barrier member interposed between battery cells blocks thermal propagation between cells.

Specifically, the present invention may provide a structure of a battery module wherein a space between a cell laminate and a housing is isolated at the cell level or at the bank level such that high-temperature gas and flame discharged from battery cells cannot propagate heat between battery cells.

The present invention may also provide a structure of a battery module having a barrier member and a barrier receptor having variable overlapping sections such that the isolation structure is maintained even when a cover is deformed and thermal propagation due to propagation of gases and flames between cells is blocked.

The present invention is also advantageous in that the present invention provides a structure of a battery module capable of absorbing tolerances or swelling by the compressibility of the barrier member and/or the barrier receptor and variable, stable, and easy to manufacture.

In addition, the present invention may have various other effects, and the descriptions thereof will be given in each embodiment, or the description of the effects that may be easily inferred by a person skilled in the art will be omitted.

### [BRIEF DESCRIPTION OF DRAWINGS]

FIG. 1 illustrates a structure of a pouch-type battery cell.
FIG. 2 illustrates the constitution of a cell laminate.
FIGS. 3 and 4 illustrate the structure of a general battery module.
FIG. 5 illustrates a structure of a battery module according to an embodiment of the present invention.
FIG. 6 illustrates structures of a barrier member and a barrier receptor according to an embodiment of the present invention.
FIG. 7 illustrates a battery module before cover is bonded according to an embodiment of the present invention.
FIG. 8 illustrates a cross-section of the battery module of FIG. 7.
FIG. 9 illustrates a battery module after cover is bonded according to an embodiment of the present invention.
FIG. 10 illustrates a cross-section of the battery module of FIG. 9.
FIG. 11 illustrates a main portion of the battery module of FIG. 10.
FIG. 12 illustrates a cross-section of a battery module after cover is deformed according to an embodiment of the present invention.
FIG. 13 illustrates a main portion of the battery module of FIG. 12.
FIGS. 14 and 15 illustrate appearances of a barrier receptor before and after deformation according to an embodiment of the present invention, respectively.
FIGS. 16 and 17 illustrate a structure of a battery pack accommodating a battery module according to an embodiment of the present invention and a vehicle with the battery pack, built therein, respectively.

### [DESCRIPTION OF REFERNCE NUMERALS]

1: cell laminate
   10: cell bank
   11: battery cell
      110: electrode assembly
      111: pouch
         111S: sealed portion
   12: barrier member
      120: compressible pad
      121: rigid plate
      122: tapered portion
2: bus bar frame assembly
3: housing
   30: pack frame
   31: cover
   32: end plate
4: barrier receptor
   40: connecting part
   41: sidewall portion
   42: overlapping section
   420: compressible pad
   421: rigid plate
   422: tapered portion
M: battery module
P: battery pack
V: vehicle
L0: separation distance
L1: first length
L2: second length

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

Hereinafter, preferred embodiments of the present invention will be described with reference to the accompanying drawings.

### [STRUCTURES OF BATTERY CELL AND CELL LAMINATE]

Hereinafter, with reference to FIGS. 1 and 2, a structure of a battery cell according to an embodiment of the present invention and a structure of a cell laminate in which the battery cells are laminated will be described in detail.

FIG. 1 illustrates a structure of a pouch-type battery cell. Referring to FIG. 1, a battery cell 11 according to an embodiment of the present invention may be a pouch-type battery cell including an electrode assembly 110 and a pouch 111 that is sealed to accommodate the electrode assembly 110. However, the structure of the battery cell 11 is not limited to pouch-type.

The pouch 111 surrounds the electrode assembly 110 by folding and sealing a sheet in half and is sealed at a sealed portion 111S at one end thereof. The sealing may be achieved by fusion, melting by high-temperature heat. Therefore, when the battery cell 11 ignites due to a short circuit, etc, it is highly probable that high-temperature gas and flame are discharged from the pouch 111 through the sealed portion 111S.

The battery cell 11 may include an electrode lead extending from the electrode assembly 110 and protruding from the pouch 111. The electrode lead may electrically connect the electrode assembly 110 to the outside.

FIG. 2 illustrates the constitution of a cell laminate. Referring to FIG. 2, a plurality of battery cells 100 may be laminated in a widthwise direction to form a cell laminate 1.

The cell laminate 1 may include a barrier member 12 interposed between the battery cells 11 to block thermal propagation. The barrier member 12 may prevent direct heat conduction between the battery cells 11 and prevent gas and flame from propagating in widthwise direction between the battery cells 11.

The barrier member 12 preferably includes a heat-resistant material to withstand high-temperature heat.

According to the embodiment of the present invention, the barrier member 12 may protrude in upward direction by a predetermined length with respect to the upper surface of the cell laminate 1. Since the barrier member 12 protrudes into the space between the cell laminate 1 and the cover, the gas and flame may be prevented from propagating through the space, thereby preventing thermal propagation between the battery cells 11. In particular, since the high-temperature gas and flame may melt the fusion of the sealed portion 111S, it is important to prevent the gas and flame from propagating through the space above the cell laminate 1.

One or battery cells 100 may constitute a cell bank 10, and one or more cell banks 10 may be isolated by the barrier member 110. Here, the barrier member 12 may prevent thermal propagation between the cell banks 10.

One or more barrier members 12 may be provided.

### [GENERAL STRUCTURE OF BATTERY MODULE]

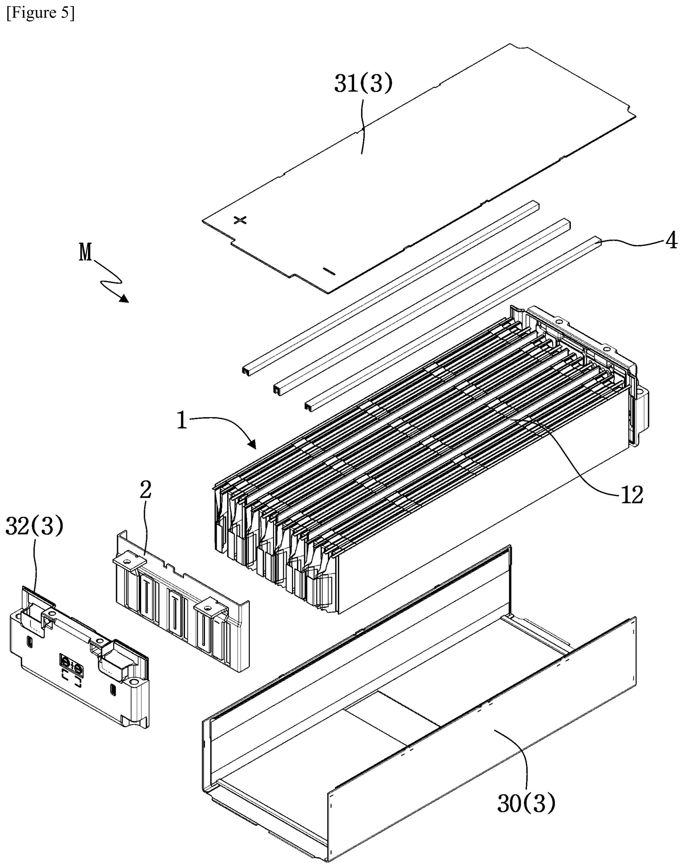

Hereinafter, with reference to FIG. 5, a general structure of a battery module according to an embodiment of the present invention will be described in detail.

FIG. 5 illustrates a structure of a battery module according to an embodiment of the present invention. Referring to FIG. 5, the cell laminate 1 may be accommodated in a housing 3 to form a battery module M.

A bus bar frame assembly 2 may be coupled to the first lengthwise end of the cell laminate 1.

The bus bar frame assembly 2 may include a pair of terminals protruding from the housing 3 for electrically connecting the electrode leads to each other and electrically connecting the entire cell laminate 1 to the outside.

The bus bar frame assembly 2 may include a bus bar frame which is a main body, a slit where the electrode leads is passed through, and a bus bar to which the electrode leads passed through the slit is connected.

The housing 3 may include: a pack frame 30 having a bottom surface and a pair of sidewalls and accommodating the cell laminate 1; a pair of end plates 32 covering the front and rear portions of the cell laminate 1, and a cover 31 covering the upper portion of the cell laminate 1.

An exhaust hole (not shown) may be provided in the cover 31 to discharge gas and flame generated from the cell laminate 1 in upward direction. It is preferable that a plurality of the exhaust holes (not shown) be provided for the structural rigidity of the cover 31 and smooth discharge of gas.

A barrier receptor 4 may be connected to the inner surface of the cover 31. The barrier receptor 4 may extend in the lengthwise direction and may have a groove shape facing the downward direction opposite to the upward direction such that one end of the barrier member 12 may be inserted.

The inner surface of the cover 31 may be recessed in upward direction to integrally form the barrier receptor 4 in the cover 31, or a separate member may form the barrier receptor 4 by attaching a separate member to the inner surface of the cover 31.

By inserting the barrier member 12 into the barrier receptor 4, the space in the housing 3 or at least the space between the cell laminate 1 and the cover 31 may be isolated in the widthwise direction. Accordingly, the propagation of gas and flame through the space may be prevented. As a result, thermal propagation between the battery cells 11 is prevented such that thermal runaway at the module level is delayed or prevented.

The number of barrier receptors 4 may be equal to or less than that of the barrier members 12. Accordingly, one or more of the barrier receptors 4 may be provided, similar to the barrier members 12.

### [STRUCTURES OF BARRIER MEMBER AND BARRIER RECEPTOR]

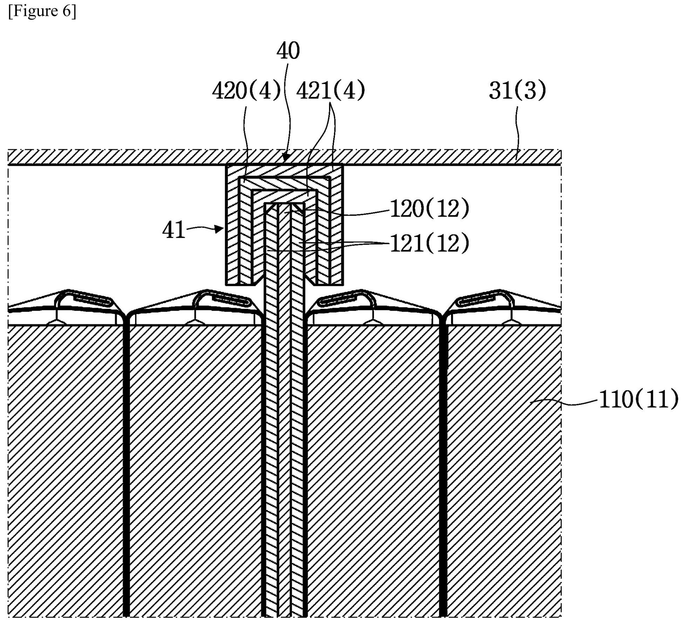

Hereinafter, with reference to FIG. 6, structures of the barrier member and the barrier receptor and the combined structure thereof according to an embodiment of the present invention will be described in detail.

FIG. 6 illustrates structures of a barrier member and a barrier receptor according to an embodiment of the present invention. Referring to FIG. 6, the barrier receptor 4 may include a pair of sidewall portions 41 protruding from the inner surface of the cover 31 in downward direction and disposed at two widthwise ends of the barrier member 12. Here, the barrier member 12 and the barrier receptor 4 may be fixedly coupled to each other by interposing one end of the barrier member 12 between the pair of sidewall portions 41. Here, as described later, it is preferable that sidewall portions 41 are not restrained in upward direction such that sidewall portions 41 are able to slide in upward direction.

The above barrier receptor 4 may include a connecting part 40 coupled to the inner surface of the cover 31 and having two widthwise ends connected to the pair of sidewall portions 41, respectively. As described below, the connecting part 40 preferably includes a flexible body such that it may be deformed together with the bending of the cover 31. "Flexible body" of the connecting part 40 is a relative concept referring to the bending strength of the connecting part 40 being lower than that of the cover 31, and the connecting part 40 may be interpreted as a rigid body in terms of yield strength thereof.

According to the embodiment of the present invention, the barrier receptor 4 may have an overall shape open in the downward direction by including the connecting part 40 attached to the cover 31 and the pair of sidewall portions 41 extending in downward direction from the two widthwise ends of the connecting part 40.

The barrier member 12 and/or the barrier receptor 4 may include a multi-layer laminated structure having different materials.

The barrier member 12 and/or the barrier receptor 4 may include a compressible material. Preferably, the barrier member 12 and/or the barrier receptor 4 may be compressed in widthwise direction as the barrier member 12 is inserted into the barrier receptor 4. Accordingly, the barrier member 12 and the barrier receptor 4 may exchange elastic restoring forces in widthwise direction toward each other, and may further be in close contact with each other, thereby being structurally stable and more reliably blocking the path of gas and flame.

In addition, the possibility of a gap due to an assembly tolerance between the barrier member 12 and the barrier receptor 4 may be lowered. When the barrier member 12 includes a compressible material, it is advantageous in that assembly tolerances between the battery cells 11 and/or between the cell laminate 1 and the pack frame 30 may be absorbed, and swelling of the battery cells 11 may also be absorbed.

The barrier member 12 and/or the barrier receptor 4 may include rigid plates 121 and 421. The rigid plates 121 and 421 may have a predetermined yield strength, and in particular, may have the ability to resist deformation due to a bending load. However, it is preferable that the bending strength of the rigid plates 121 and 421 is lower than that of the cover 31. The rigid plates 121 and 421 may reinforce the structural rigidity of the barrier member 12 and/or the barrier receptor 4, thereby preventing deformation of the barrier member 12 and/or the barrier receptor 4 caused by high-pressure gas, etc., and may reinforce the bond between the barrier member 12 and the barrier receptor 4.

The rigid plates 121 and 421 may form the outermost shell of the barrier member 12 and/or the barrier receptor 4. Here, the rigid plates 121 and 421 are preferably made of a material having heat-resistance property and/or insulating property. Accordingly, the rigid plates 121 and 421 may prevent short circuits between the battery cells 11, and may maintain structural rigidity without being deformed even when the battery cell 11 ignites.

According to the embodiment of the present invention, the barrier member 12 and the barrier receptor 4 may include a triple-layer structure wherein the rigid plates 121 and 421 having insulating property and heat-resistance property is laminated on both sides of compressible pads 120 and 420 containing a compressible material, respectively. Here, the barrier receptor 4 may be manufactured by folding twice at different points a triple-layer member the same as the barrier member 12.

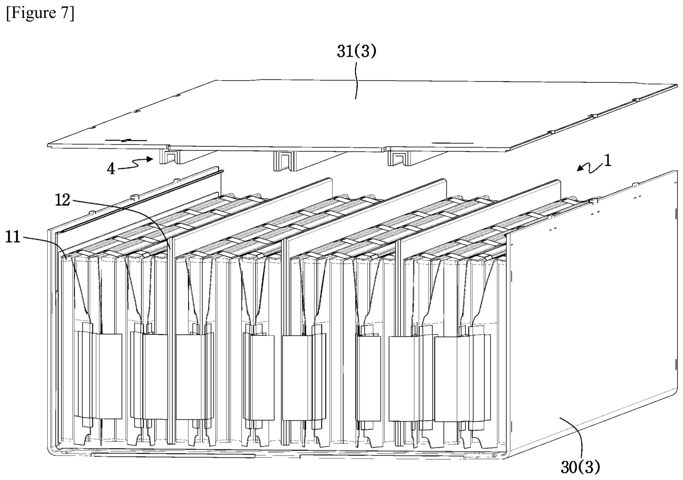

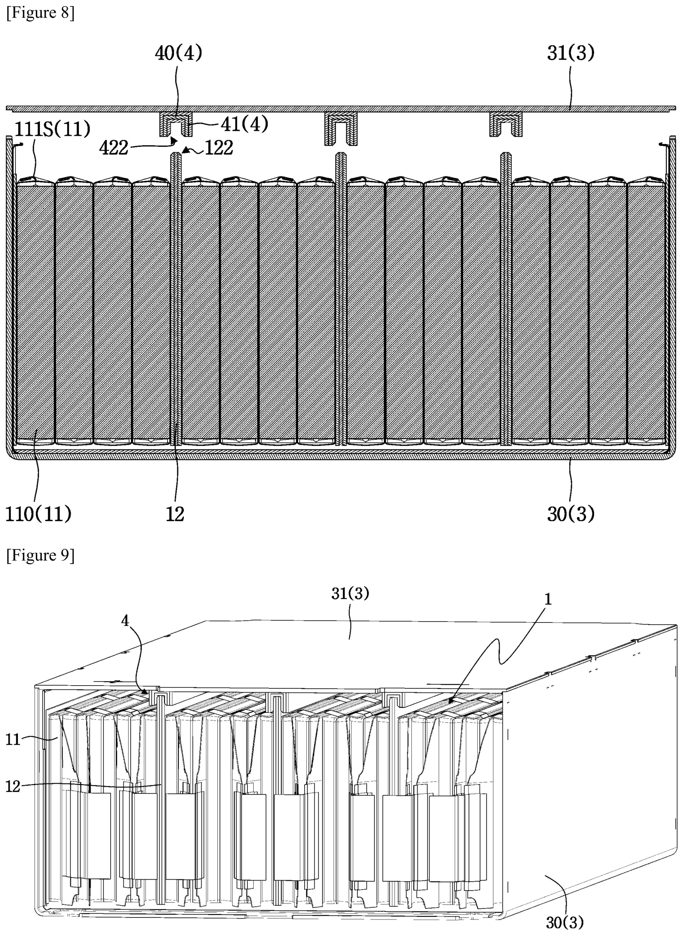

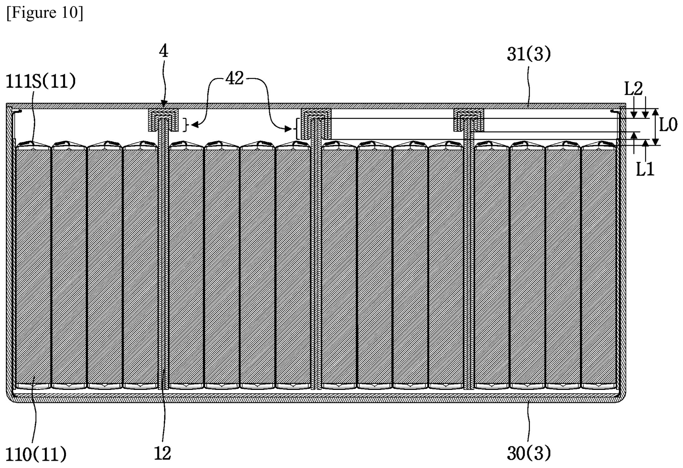

FIG. 7 illustrates a battery module before cover is bonded according to an embodiment of the present invention, and FIG. 8 illustrates a cross-section of the battery module of FIG. 7. In addition, FIG. 9 illustrates a battery module after cover is bonded according to an embodiment of the present invention, and FIG. 10 illustrates a cross-section of the battery module of FIG. 9. Referring to FIGS. 7 to 10, the barrier member 12 and the barrier receptor 4 may be coupled to each other as the cover 31 and the upper portion of the pack frame 30 are coupled to each other. Specifically, here, one end of the barrier member 12 may be inserted into the barrier receptor 4 from thereunder.

A tapered portion 122 narrowing in upward direction may be provided at an upper end of the barrier member 12. The tapered portion 122 may guide one end of the barrier member 12 to be accurately inserted into the barrier receptor 4 when the cover 31 and the pack frame 30 are coupled.

A tapered portion 422 narrowing in downward direction may be provided at the barrier receptor 4. The tapered portion 422 may guide one end of the barrier member 12 to be accurately inserted into the barrier receptor 4 when the cover 31 and the pack frame 30 are coupled.

According to the embodiment of the present invention, the thickness of the barrier member 12 in widthwise direction before compression may be greater than the inner width of the barrier receptor 4, and the barrier member 12 and/or the barrier receptor 4 may be compressed in widthwise direction as the barrier member 12 is inserted into the barrier receptor 4 guided by the tapered portions 122 and 422.

When the barrier member 12 and/or the barrier receptor 4 include multi-layer structure according to the embodiment of the present invention, it is preferable that the tapered portions 122 and 422 are provided at the outermost rigid body of the barrier member 12 and/or the barrier receptor 4.

### [EFFECT OF BARRIER MEMBER AND BARRIER RECEPTOR IN PREVENTING THERMAL PROPAGATION]

Hereinafter, with reference to FIGS. 10 to 13, the effect of the barrier member and the barrier receptor in preventing thermal propagation according to an embodiment of the present invention will be described in detail.

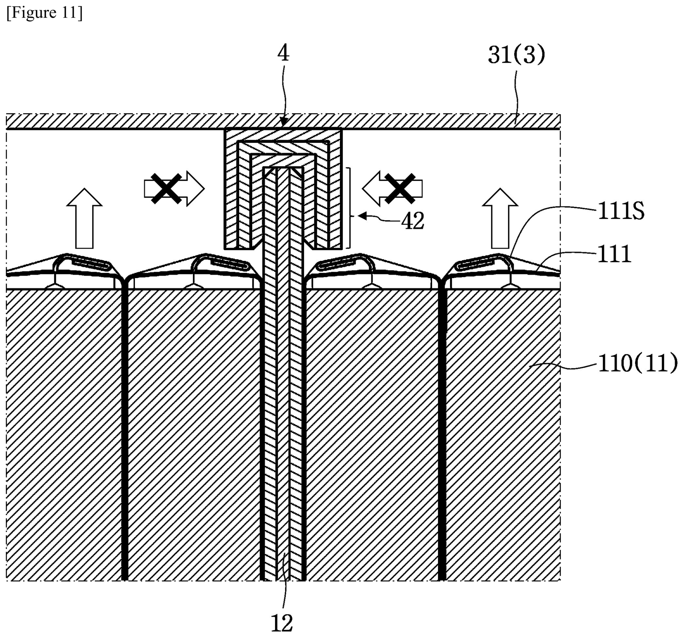

FIGS. 10 and 11 illustrate a cross-section and a main portion thereof of a battery module before cover is deformed according to an embodiment of the present invention and its main parts. Referring to FIGS. 10 and 11, the barrier member 12 and the barrier receptor 4 isolate the space between the cell laminate 1 and the cover 31 in widthwise direction, thereby preventing gas and flame discharged from the battery cell 11 from transmitting heat to other battery cells through the space.

According to the embodiment of the present invention, the sealed portion 111S, as fused and sealed, may be melted by high-temperature heat, and thus the sealed portion 111S becomes a weak point of the pouch 111 such that gas and flame generated from the electrode assembly 110 when the battery cell 11 ignites are likely to be discharged in upward direction where the sealed portion 111S is provided. Therefore, isolating the space above the cell laminate 1 is effective in blocking thermal propagation between the battery cells 11.

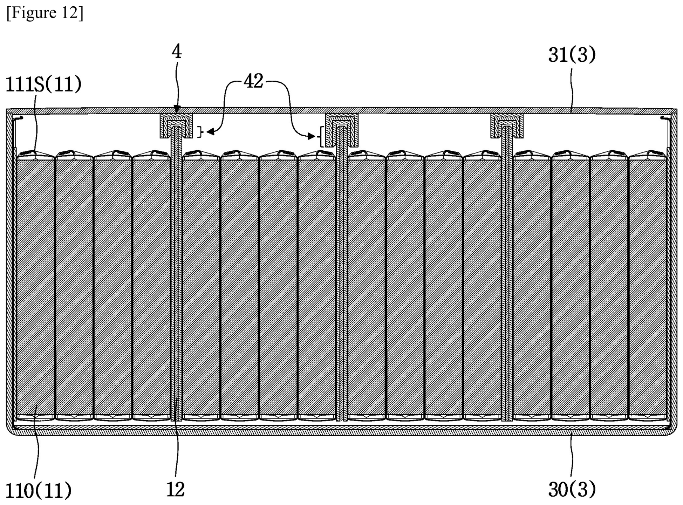

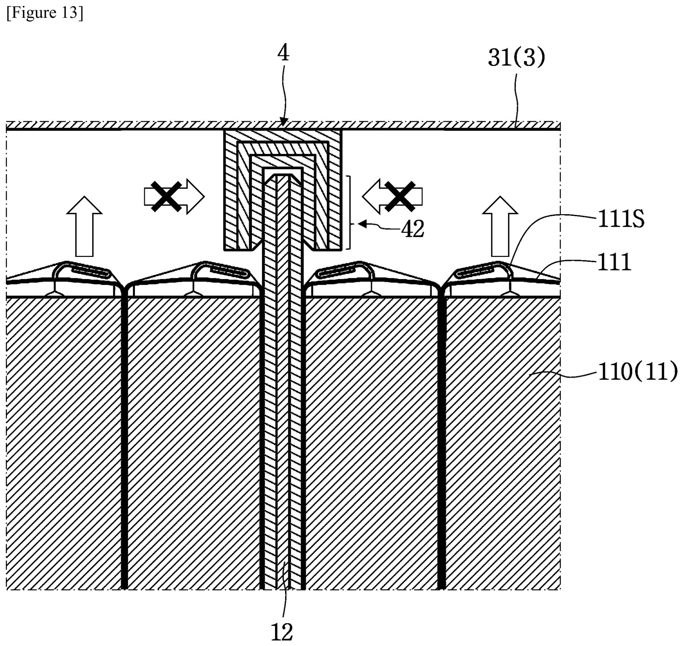

FIGS. 12 and 13 illustrate a cross-section and a main portion thereof of a battery module after cover is deformed according to an embodiment of the present invention. Referring to FIGS. 12 and 13, the cover 31 may be deformed by high-temperature heat and/or high pressure as gas or flame is generated within the battery module M, or may be deformed by an external shock, etc. In particular, the cover 31 may be bent or expanded such that the widthwise center thereof is curved in upward direction. In such case, the distance between the cover 31 and the cell laminate 1 may increase.

Referring back to FIG. 11, the barrier member 12 and the barrier receptor 4 may overlap each other in widthwise direction at an overlapping section 42 that extends in upward direction, has a predetermined length.

The length of the overlapping section 42 may at least 1/2 of the distance L0 between the cell laminate 1 and the cover 31 considering the maximum deformation degree of the cover 31.

When the barrier member 12 and the barrier receptor 4 are provided in multiple pairs, the overlapping section 42 of a pair of the barrier member 12 and the barrier receptor 4 closer to the widthwise center may be longer than that of a pair of the barrier member 12 and the barrier receptor 4 farther from the widthwise center. Such structure is employed since the displacement of the widthwise center of the cover 31 is the greatest when the cover 31 is deformed as described above.

In such case, among the multiple pairs of the barrier member 12 and the barrier receptor 4, the overlapping section 42 of the pair closest to the widthwise center of the battery module M may have a first length L1 equal to or longer than 1/2 of the distance L0. Here, among the multiple pairs of the barrier member 12 and the barrier receptor 4, the overlapping section 42 of the outermost pair in widthwise direction of the battery module M may have a second length L2 smaller than the first length L1.

Referring back to FIGS. 12 and 13, as the cover 31 is deformed, the barrier member 12 and the barrier receptor 4 may slide away from each other. Here, as the overlapping section 42 is provided, the barrier member 12 may not be decoupled from the barrier receptor 4 despite the deformation of the cover 31, and the barrier member 12 and the barrier receptor 4 may still isolate the space in widthwise direction. Accordingly, even when the cover 31 is deformed, thermal propagation between the battery cells 11 may be prevented, thereby delaying or blocking thermal runaway.

In order to achieve this, it is preferable that the barrier receptor 4 and the barrier member 12 are not restrained in upward direction except for a friction force, but, alternatively, the barrier receptor 4 and the barrier member 12 may be fixed to each other by an adhesive providing easy detachment of the barrier receptor 4 from the barrier member 12 by friction force below a predetermined level or by a fusion agent that is easily melted by high-temperature heat.

### [EFFECT OF DEFORMATION OF BARRIER RECEPTOR]

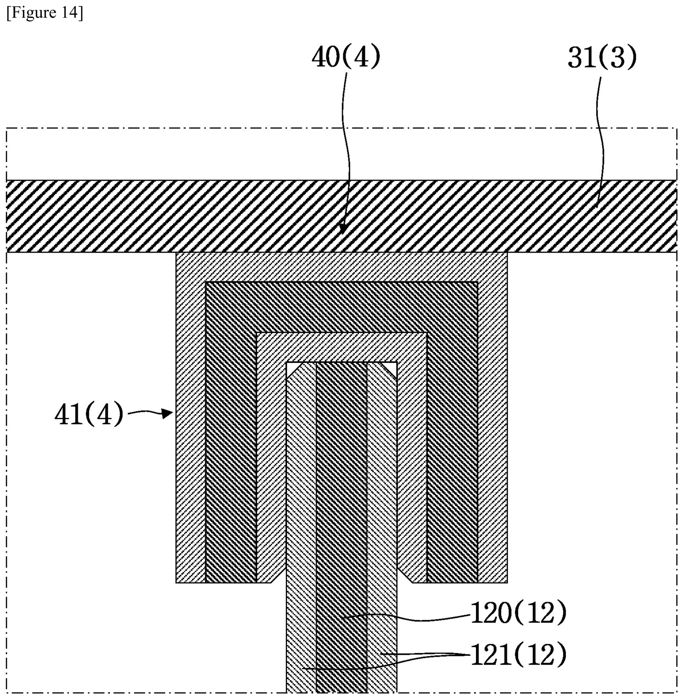

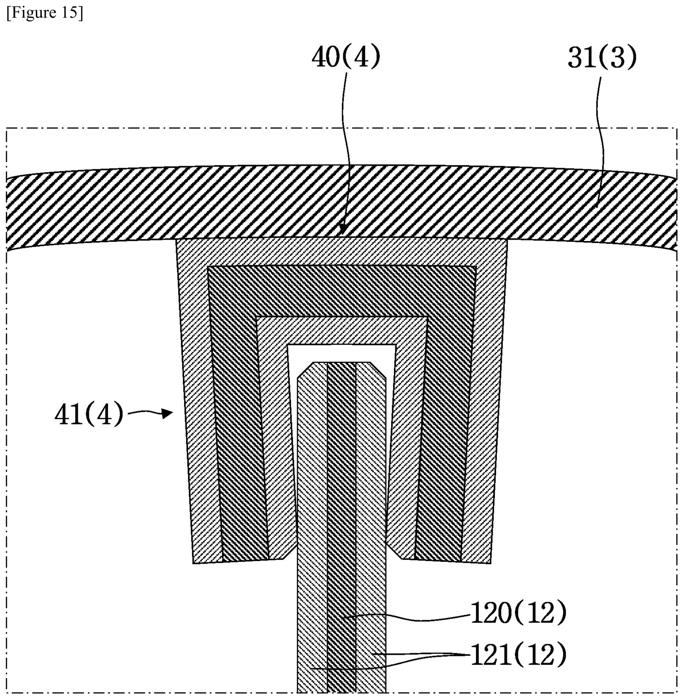

Hereinafter, with reference to FIGS. 14 and 15, the effect of deformation of the barrier receptor according to an embodiment of the present invention will be described in detail.

FIGS. 14 and 15 illustrate appearances of a barrier receptor before and after deformation according to an embodiment of the present invention, respectively. Referring to FIGS. 14 and 15, the connecting part 40 may include a flexible body that is flexibly deformed together with the deformation of the cover 31. As described above, "flexible body" of the connecting part 40 is a relative concept referring to the bending strength of the connecting part 40 being lower than that of the cover 31, and the connecting part 40 may be interpreted as a rigid body in terms of yield strength thereof.

As the connecting part 40 is flexibly deformed together with the deformation of the cover 31, the lower end portion of the sidewall portion 41 may be narrowed inward. Accordingly, the sidewall portion 41 may be in stronger contact with the barrier member 12 by pressing both widthwise ends of the barrier member 12 such that the barrier member 12 and the barrier receptor 4 may more reliably isolate the space.

According to the embodiment of the present invention, the compressible pads 120 and 420 of the barrier member 12 are further compressed when the sidewall portion 41 strongly presses both sides of the barrier member 12 due to deformation of the connecting part 40, thereby allowing a stronger elastic restoring force toward the contact between the barrier member 12 and the barrier receptor 4. In contrast, when the barrier member 12 does not include a compressible material, the barrier member 12 and the barrier receptor 4 may come into close contact with each other due to elastic force caused by bending deformation of the sidewall portion 41.

### [STRUCTURES OF BATTERY PACK AND VEHICLE]

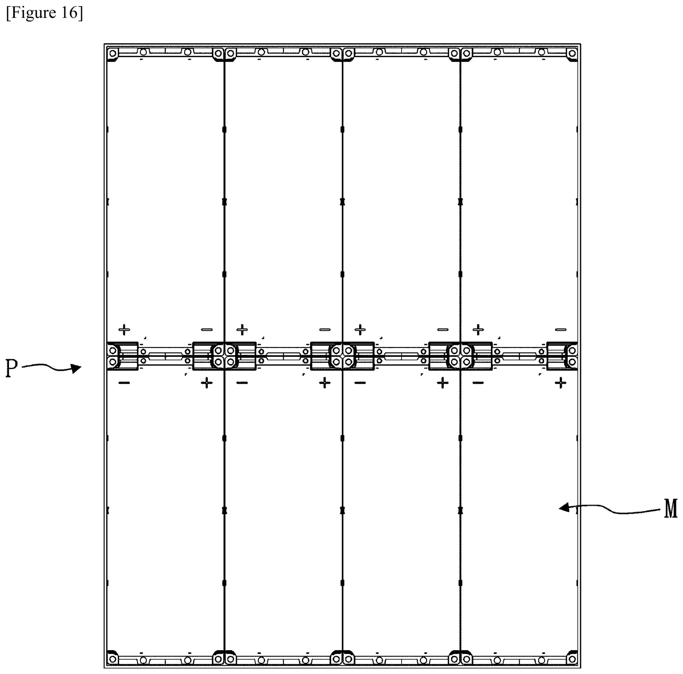

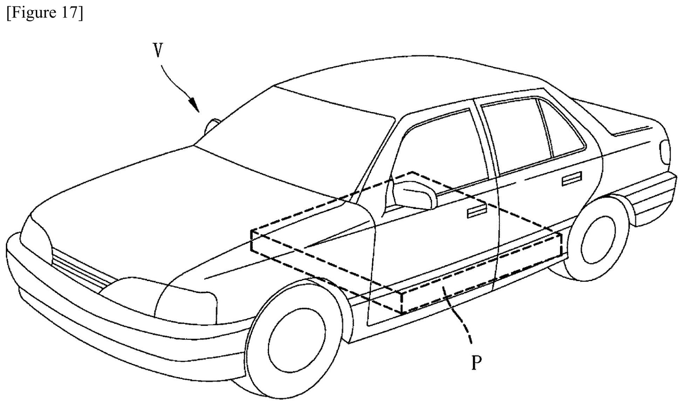

Hereinafter, with reference to FIGS. 16 and 17, the structure of a battery pack accommodating a battery module according to an embodiment of the present invention and a vehicle incorporating the same will be described.

FIGS. 16 and 17 illustrate a structure of a battery pack accommodating a battery module according to an embodiment of the present invention and a vehicle with the battery pack, built therein, respectively. Referring to FIGS. 17 and 18, a plurality of battery modules M may be integrated to form a battery pack P for increasing the capacity and/or voltage. The battery pack P may include an exhaust device capable of discharging gas and flame from an ignited battery module M. The battery pack P may be built into a vehicle V as a power source. The vehicle V may include an electric vehicle, a hybrid vehicle, etc.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery module, comprising:
a cell laminate comprising: a plurality of battery cells laminated in a widthwise direction; and a barrier member interposed therebetween;
a housing comprising: a pack frame accommodating the cell laminate; and a cover covering an upper end of the pack frame; and
a barrier receptor coupled to an inner surface of the cover the barrier receptor having a shape open in downward direction with an upper end of the barrier member inserted therein,
wherein the barrier member and the barrier receptor are provided with overlapping sections of a predetermined length extending in upward direction and overlapping in widthwise direction, and
the barrier member and the barrier receptor are slidable in upward direction while maintaining contact with each other.

2. The battery module of claim 1, wherein the barrier member comprises a heat-resistant material.

3. The battery module of claim 1, wherein the barrier member protrudes in upward direction with respect to the cell laminate.

4. The battery module of claim 1, wherein the barrier member comprises a compressible material.

5. The battery module of claim 4, wherein the barrier member comprises a compressible pad including the compressible material and a pair of rigid plates laminated at two widthwise ends of the compressible pad.

6. The battery module of claim 5, wherein the pair of rigid plates comprise a heat-resistant material.

7. The battery module of claim 1, wherein the barrier receptor comprises a pair of sidewall portions protruding in downward direction at two widthwise ends of the barrier member and extending in lengthwise direction.

8. The battery module of claim 7, wherein the pair of sidewall portions comprise a compressible material.

9. The battery module of claim 8, wherein each of the pair of sidewall portions comprises a compressible pad comprising a compressible material and a rigid plate comprising a heat-resistant material.

10. The battery module of claim 9, wherein a pair of rigid plates is provided at two widthwise ends of the compressible pad, respectively, in each of the pair of sidewall portions.

11. The battery module of claim 7, wherein the barrier receptor comprises a connecting part provided on the inner surface of the cover and connected to the pair of sidewall portions at two widthwise ends thereof, respectively, the connecting part comprising a flexible body deforming together with the cover as the cover is deformed.

12. The battery module of claim 1, wherein a tapered portion narrowing in upward direction is provided at an upper end of the barrier member.

13. The battery module of claim 1, wherein a tapered portion narrowing in downward direction is provided at the barrier receptor.

14. The battery module of claim 1, wherein the barrier member and the barrier receptor are provided in multiple pairs, and
the overlapping section of a pair of the barrier member and the barrier receptor closer to a widthwise center is longer than that of a pair of the barrier member and the barrier receptor farther from the widthwise center.

15. The battery module of claim 1, wherein a length of the overlapping section is at least 1/2 of a distance between an upper surface of the cell laminate and the inner surface of the cover.

16. The battery module of claim 14, wherein among the multiple pairs of the barrier member and the barrier receptor, a length of the overlapping section of a pair of the barrier member and the barrier receptor closest to the widthwise center is at least 1/2 of a distance between an upper surface of the cell laminate and the inner surface of the cover.

17. A battery pack comprising a battery module of any one of claims 1 to 16.

18. A vehicle comprising a battery pack of claim 17.
